# EUROPÄISCHE PATENTSCHRIFT

(11) **EP 3 899 678 B1**
(45) Veröffentlichungstag und Bekanntmachung des Hinweises auf die Patenterteilung: **29.10.2025**
(21) Anmeldenummer: 19832540.9
(22) Anmeldetag: 20.12.2019
(51) Int. Cl.: G05B 19/418

(54) **AUTOMATISIERUNGSEINRICHTUNG, ANLAGENMODUL UND VERFAHREN ZUR LOKALEN STEUERUNG EINER TECHNISCHEN HARDWARE**
AUTOMATION DEVICE, SYSTEM MODULE AND METHOD FOR LOCAL CONTROL OF PROCESS HARDWARE
DISPOSITIF D'AUTOMATISATION, MODULE D'INSTALLATION ET PROCÉDÉ DE COMMANDE LOCALE D'UN MATÉRIEL TECHNIQUE

(30) Priorität: 21.12.2018 DE 102018133557
(43) Veröffentlichungstag der Anmeldung: 27.10.2021
(73) Patentinhaber: Wago Verwaltungsgesellschaft mbH, 32423 Minden (DE)
(72) Erfinder: HOLM, Thomas, 31655 Stadthagen (DE)
(74) Vertreter: Gerstein, Hans Joachim
(86) Internationale Anmeldenummer: PCT/EP2019/086657
(87) Internationale Veröffentlichungsnummer: WO 2020/127955

(56) Entgegenhaltungen:
- DE-A1- 102010 063 164
- DE-A1- 102016 201 077
- DE-A1- 102017 108 539
- US-A1- 2008 189 441
- GIRBEA A ET AL: "Automatic address space generation for an OPC UA server of a flexible manufacturing system", APPLIED COMPUTATIONAL INTELLIGENCE AND INFORMATICS (SACI), 2011 6TH IEEE INTERNATIONAL SYMPOSIUM ON, IEEE, 19 May 2011 (2011-05-19), pages 483 - 488, XP031944346, ISBN: 978-1-4244-9108-7, DOI: 10.1109/SACI.2011.5873052

## Beschreibung

Die Erfindung betrifft eine Automatisierungseinrichtung zur lokalen Steuerung einer technischen Hardware eines Anlagenmoduls, wobei die technische Hardware des Anlagenmoduls zur Durchführung eines technischen Teilprozesses vorgesehen ist. Die Erfindung betrifft ebenso ein solches Anlagenmodul mit einer derartigen Automatisierungseinrichtung sowie ein Verfahren zur lokalen Steuerung einer technischen Hardware eines Anlagenmoduls hierzu.

Mithilfe von Automatisierungseinrichtungen und der Programmlogik der Automatisierungseinrichtung wird es möglich, die durch eine Anlage durchzuführenden Prozesse weitestgehend zu automatisieren, um so die Steuerung und Regelung der Anlage und somit des Prozesses autark durchführen zu können. Darüber hinaus kann mithilfe der Automatisierungseinrichtung auch eine Dokumentation des Prozesses durchgeführt werden, wodurch sämtliche Prozessschritte transparent und im Nachgang reproduzierbar werden.

Hierfür ist die Automatisierungseinrichtung mit einer Reihe von Sensoren und/oder Aktoren der technischen Hardware einer Anlage bzw. eines Anlagenmoduls verbunden, um so basierend auf den erfassten Sensorwerten und den hierfür entsprechend hinterlegten Funktionen bzw. Diensten dann die Aktoren so anzusteuern, dass die Anlage den gewünschten Prozess mit den vorgegebenen Parametern durchführt. Änderungen bzw. Ergänzungen oder Umrüstungen der Anlage, die durch eine geänderte Anforderung an den Prozess, der von der Anlage durchgeführt werden soll, notwendig werden, gehen meist in der Regel einher mit einer entsprechenden Umrüstung bzw. Ergänzung und Änderung der zugrundeliegenden technischen Hardware, was schließlich auch eine Umkonfiguration bzw. Umprogrammierung der Automatisierungseinrichtung notwendig werden lässt.

Neuere Entwicklungen in der Prozessautomation beschäftigen sich daher mit modularen Anlagenkonzepten, bei denen die Anlage aus einzelnen vorgefertigten Anlagenmodulen aufgebaut ist, um so bei einer Anpassung der Anlage an einen geänderten Prozess nur diejenigen Module entsprechend adressieren zu müssen, die letztlich von den geänderten Prozessparametern betroffen sind. Daher werden die einzelnen Anlagenmodule bevorzugt mit eigenen Automatisierungseinrichtungen versehen, welche das jeweilige Anlagemodul autark steuern.

Bei solchen modularen Konzepten stellt jedes Anlagenmodul seine verfahrenstechnische oder produktionstechnische Funktion als Dienst einer übergeordneten Prozessführungsebene (PFE) zur Verfügung und nimmt somit die Position eines Dienstanbieters ein. Die vom Anlagenmodul angebotene Dienstleistung kann von der Prozessführungsebene abgerufen werden, die damit ein Dienstnutzer wird. Die Integration mehrerer Anlagenmodule und deren Dienste zu einer Gesamtanlage werden dabei als PFE-Engineering bezeichnet.

Die DE 10 2016 201 077 A1 beschreibt dabei ein Anlagenmodul, dessen zugrundeliegende technische Hardware mithilfe einer Steuerung autark automatisiert werden soll. Über eine Außenschnittstelle kann dabei die Steuerung eines jeden einzelnen Anlagenmoduls der Prozessführungsebene als Dienstnutzer bereitgestellt werden, indem auf der Außenschnittstelle ein OPC-UA-Server vorgesehen ist, der die entsprechenden Informationen und Echtzeitwerte des Anlagenmoduls enthält. Der OPC-UA-Server weist hierfür eine Informationsstruktur auf, die sowohl fest vorgegebene statische Informationen als auch dynamische Informationen enthält, wobei die statischen Informationen der Informationsstruktur die technische Hardware des Anlagenmoduls beschreiben, während die dynamischen Informationen die Echtzeitwerte während des laufenden Betriebs der Anlage repräsentieren. Die Steuerung ist dabei so ausgebildet, dass sie die von den Sensoren der Anlage empfangenen Echtzeit-werte als dynamische Werte in die Informationsstruktur schreibt, wodurch die Prozessführungsebene Zugriff auf die Echtzeitwerte der Anlage erhält.

Ein Problem hierbei besteht jedoch darin, dass bei einer zugrundeliegenden Änderung der technischen Hardware des Anlagenmoduls, sei es nun eine Änderung an den Komponenten zur Durchführung des Teilprozesses oder Änderungen an dem für die Automation notwendigen Elementen, wie Sensoren und/oder Aktoren, die zugrundeliegende Informationsstruktur auf dem Server der Außenschnittstelle neu erstellt werden muss, damit die statischen Informationen, welche den Aufbau der technischen Hardware einschließlich der Sensoren und/oder Aktoren beschreibt, an die Strukturänderung der technischen Hardware angepasst wird. Denn die Informationsstruktur mit den statistischen Informationen ist fest vorgegeben. Dies erschwert jedoch im erheblichen Umfang die Anpassung der technischen Hardware eines Anlagenmoduls und verhindert auch aus ökonomischen Gesichtspunkten beispielsweise den Austausch von Komponenten bzw. Elementen einer technischen Hardware, um eine Umprogrammierung bzw. Umkonfigurierung der Informationsstruktur des Servers zu vermeiden.

So ist es oftmals wünschenswert, zusätzliche Sensoren und ggf. Aktoren einer bestehenden technischen Hardware eines Anlagenmoduls hinzuzufügen, um so beispielsweise die Prozessautomation des zugrundeliegenden Teilprozesses zu verbessern. Das Hinzufügen eines Sensors bedingt jedoch die Umkonfiguration der Informationsstruktur mit den statischen Informationen, um so zum einen den Sensor dem Server bekannt zu machen und zum anderen, um die entsprechenden von dem Sensor zur Verfügung gestellten Funktionen und Dienste entsprechend nutzen zu können.

Die DE 10 2010 063 164 A1 und DE 10 2017 108 539 A1 beschäftigen sich mit der Anpassung der Konfiguration eines Automatisierungssystems bei sich verändernder Hardwarestruktur. Dabei ist vorgesehen, dass beispielsweise neu hinzugefügte Feldgeräte mithilfe ihrer Seriennummer innerhalb des Netzwerkes identifiziert und dann ein entsprechendes Informationsmodell bzw. eine entsprechende Serverlogik aus dem Internet vom Hersteller heruntergeladen wird.

Vor diesem Hintergrund ist es daher Aufgabe der vorliegenden Erfindung eine verbesserte Automatisierungseinrichtung sowie ein verbessertes Verfahren zur lokalen Steuerung anzugeben, mit denen auch nachträglich die Komponenten bzw. Elemente einer technischen Hardware eines Anlagenmoduls strukturell verändert werden können, ohne dass dies die Automatisierung durch die Automatisierungseinrichtung in ihrer Funktionsweise stört.

Die Aufgabe wird mit der Automatisierungseinrichtung gemäß Anspruch 1, dem Anlagenmodul gemäß Anspruch 9 sowie dem Verfahren gemäß Anspruch 10 erfindungsgemäß gelöst.

Unter der Bezeichnung "ein" wird im Sinne der vorliegenden Erfindung ein unbestimmter Artikel verstanden und kein Zahlwort im Sinne von "1".

Unter dem Begriff "Steuerung" wird im Sinne der vorliegenden Erfindung aus Prozesssicht nicht nur das Steuern verstanden, sondern auch das Regeln mithilfe einer Regelung.

Unter dem Begriff "technische Hardware" werden alle zur Durchführung eines zu automatisierenden Teilprozesses benötigten Elemente und Komponenten des Anlagenmoduls verstanden, insbesondere die für die Automatisierung notwendigen Komponenten und Elemente wie Sensoren und/oder Aktoren, IO-Koppler, Feldbussysteme und dergleichen.

Eine Automatisierungseinrichtung zur lokalen Steuerung einer technischen Hardware eines Anlagenmoduls wird durch die kennzeichnenden Merkmale des Anspruchs 1 weiter ausgebildet, wobei die technische Hardware des Anlagenmoduls zur Durchführung eines technischen Teilprozesses vorgesehen ist. Eine technische Anlage kann dabei aus mehreren Anlagenmodulen bestehen bzw. aufgebaut sein, wobei durch den modularen Aufbau der gesamten technischen Anlage aus den einzelnen Anlagenmodulen bedarfsweise Anlagenmodule hinzugefügt oder entfernt werden können.

Die Automatisierungseinrichtung weist eine elektronische Steuereinheit zur lokalen Steuerung der technischen Hardware des entsprechenden Anlagemoduls auf, wobei die elektronische Steuereinheit eingerichtet ist, die technische Hardware des Anlagenmoduls insbesondere autark zu steuern. Es ist insbesondere vorgesehen, dass die Automatisierungseinrichtung ausschließlich die technische Hardware des Anlagenmoduls steuert und nicht dafür vorgesehen ist, andere Anlagenmodule mit zu steuern. Selbstverständlich ist dies aber ebenfalls vom Kerngedanken der vorliegenden Erfindung gedeckt.

Des Weiteren weist die Automatisierungseinrichtung eine elektronische Schnittstelleneinheit auf, die mit der elektronischen Steuereinheit verbunden oder verbindbar ist, um so eine Verbindung der Automatisierungseinrichtung mit einer übergeordneten Prozessführungsebene (PFE) sicherstellen zu können. Die elektronische Schnittstelleneinheit umfasst hierfür einen OPC-UA-Server, der so ausgebildet sein kann, dass er in der Prozessführungsebene als Dienstanbieter auftritt und somit die entsprechenden verfahrenstechnischen und produktionstechnischen Funktionen als Dienst der übergeordneten Prozessführungsebene zur Verfügung stellt.

Der OPC-UA-Server der elektronischen Schnittstelleneinheit umfasst hierfür eine vorgegebene Informationsstruktur mit statischen und dynamischen Informationen, wobei die statischen Informationen der Informationsstruktur insbesondere den Aufbau und die Struktur der technische Hardware des Anlagenmoduls und/oder der daraus abgeleiteten verfügbaren technischen Teilprozesse beschreiben und die elektronische Steuereinheit eingerichtet ist, die dynamischen Informationen als von der technischen Hardware abhängige zeitvariable Werte in die Informationsstruktur zu schreiben. Die Echtzeit-Werte der technischen Hardware des Anlagenmoduls würden demzufolge von der Steuereinheit erfasst und als dynamische Informationen in die Informationsstruktur eingeschrieben, so dass die übergeordnete Prozessführungsebene als Dienstnutzer auf diese zeitvariablen Werte, die von dem Server zur Verfügung gestellt werden, zugreifen und diese lesen und/oder schreiben kann. Die von der technischen Hardware abhängigen zeitvariablen Werte können dabei insbesondere Echtzeitwerte der technischen Hardware und/oder in die Zukunft basierend auf dem aktuellen Zustand der Hardware prognostizierte Werte oder Parameter sein.

Erfindungsgemäß ist die Automatisierungseinrichtung nun derart ausgebildet, dass sie eine Strukturänderung der technischen Hardware des Anlagenmoduls basierend auf einem Signal einer hinzugefügten Komponente der technischen Hardware automatisch und autark durchführen kann. Das Erkennen der Strukturänderung kann dabei beispielsweise durch die elektronische Steuereinheit oder ggf. auch durch die elektronische Schnittstelleneinheit bzw. dem hiervon umfassten OPC-UA-Server geschehen. Die elektronische Steuereinheit ist nun so eingerichtet, dass sie die Informationsstruktur mit den statischen Informationen, die zur Beschreibung der technischen Hardware dienen, basierend auf der erkannten Strukturänderung, d.h. insbesondere basierend auf einem Signal der hinzugefügten Komponente, verändert, so dass die Informationsstruktur mit den statischen Informationen an die geänderte technische Hardware angepasst wird. Dabei erfolgt das Verändern der Informationsstruktur durch die elektronische Steuereinheit automatisch und autark durch die elektronische Steuereinheit, ohne dass die übergeordnete Prozessführungsebene manuell in die Informationsstruktur eingreifen muss.

Hierdurch wird eine Automatisierungseinrichtung geschaffen, der im laufenden Betrieb Komponenten der technischen Hardware, beispielsweise Sensoren oder Aktoren, hinzugefügt, entfernt oder verändert werden können, ohne dass hierfür die Informationsstruktur durch Mitarbeiter umkonfiguriert bzw. umprogrammiert werden muss. Vielmehr erkennt die Automatisierungseinrichtung z.B. anhand eines Signals der Komponente eine Strukturänderung der technischen Hardware, woraufhin dann die elektronische Steuereinheit die Informationenstruktur basierend auf der erkannten Strukturänderung so verändert, dass die Informationsstruktur mit den statischen Informationen in dem Server die geänderte technische Hardware des Anlagenmoduls korrekt beschreibt. Hierdurch können Kosten für die Umkonfiguration bei einer Veränderung der technischen Hardware eingespart und Inkonsistenzen aufgrund einer fehlerhaften Umstrukturierung mit den statischen Informationen im Server vermieden werden. Der PFE kann durch lesen der nun veränderten Informationsstruktur entsprechende Maßnahmen einleiten.

Die elektronische Schnittstelleneinheit umfasst dabei als Server einen OPC-UA-Server, so dass auf eine einfache und einheitliche Weise mit dem Anlagenmodul bzw. der technischen Hardware kommuniziert werden kann. Insbesondere können so individuelle Informationen zielgerichtet von dem Anlagenmodul abgefragt werden, wobei nicht interessierende Informationen nicht gelesen werden. Insbesondere weist der OPC-UA-Server hierzu eine vorgegebene Informationsstruktur auf, die statische und dynamische Informationen bezüglich der technischen Hardware des Anlagenmoduls enthält. Hierbei beschreiben die statischen Informationen die technische Hardware und die Steuerung, so dass alle Informationen bereitgestellt werden, die möglicherweise für das PFE-Engineering und während des Betriebs der Anlage benötigt werden. Diese Informationen können beispielsweise Diagnoseinformationen, eine detaillierte Beschreibung der durch das Anlagenmodul angebotenen Dienste, eine Beschreibung der verfügbaren Zustände und dem regelungstechnischen Verhalten des Anlagenmoduls, eine Beschreibung der verfügbaren Befehle und deren Syntax und eine Beschreibung der auslesbaren Zustandsinformationen und Messwerte umfassen.

Daneben umfasst die auf dem OPC-UA-Server verfügbare Informationsstruktur auch dynamische Informationen als von der technischen Hardware abhängige zeitvariable Werte und bietet daher die Möglichkeit der Kommunikation mit dem Anlagenmodul während des Betriebs. Diese zeitvariablen Werte der technischen Hardware werden durch die Steuerung in die Informationsstruktur auf den OPC-UA-Server geschrieben. Damit werden auch sich während des Betriebs dynamisch ändernde Werte einfach und zielgerichtet von außen abrufbar, beispielsweise durch eine Steuerung der übergeordneten Prozessführungsebene.

Demzufolge ist die elektronische Steuereinheit der erfindungsgemäßen Automatisierungseinrichtung eingerichtet, basierend auf einer erkannten Strukturänderung, die Informationsstruktur und die in der Informationsstruktur enthaltenen statischen Informationen durch Verändern der angeboten Dienste, einer Veränderung der Beschreibung der verfügbaren Zustände sowie einer Veränderung des regelungstechnischen Verhaltens des Anlagenmoduls zu verändern. Außerdem können Beschreibungen der verfügbaren Befehle und deren Syntax sowie die Beschreibung von auslesbaren Zustandsinformationen, Parameter, Funktionen und Messwerte in der Informationsstruktur und den statischen Informationen verändert werden, um so den OPC-UA Server bezüglich der geänderten Hardware aktuell zu halten.

Bevorzugt werden daher die Parameter, Funktionen und/oder Dienste der technischen Hardware bei einer Strukturänderung in der Informationsstruktur und den statischen Informationen der Informationsstruktur angepasst, so dass der OPC-UA-Server beispielsweise durch einfaches Hinzufügen eines weiteren Sensors diesen auch entsprechend in seiner Struktur aufnehmen und verwenden kann.

In einer Ausführungsform hat die Informationsstruktur einen oder mehrere Platzhalter bzw. Schema-Platzhalter, um so die Informationsstruktur basierend auf diesen Platzhaltern verändern zu können. Dies ist insbesondere dann interessant, wenn die Informationsstruktur des Servers bevorzugt nach Struktur eines Module Type Package (MTP) gebildet wird, das alle Informationen enthält, die zur Integration der technischen Hardware des Anlagenmoduls notwendig sind. Hierdurch wird unter anderem die Möglichkeit geschaffen, die Struktur gemäß einer MTP-Manifest Datei mithilfe OPC-UA-spezifischen Referenzmechanismen zu verändern und so die statischen Informationen der Informationsstruktur bzw. die Informationsstruktur an sich an die geänderte technische Hardware des Anlagenmoduls anzupassen.

Erfindungsgemäß weist die Informationsstruktur dabei eine Mehrzahl von Knoten und Verknüpfungen der Knoten auf, um so die technische Hardware des Anlagenmoduls beschreiben zu können.

Wie bereits erwähnt, ist es vorteilhaft, wenn die elektronische Steuereinheit zum Verändern der Informationsstruktur mit den statischen Informationen im laufenden Betrieb der Steuerung der technischen Hardware des Anlagenmoduls, d.h. im laufenden Betrieb der Automatisierungseinrichtung, und/oder im laufenden Betrieb der technischen Hardware des Anlagenmoduls an sich ausgebildet ist.

In einer weiteren Ausführungsform ist vorgesehen, dass die elektronische Steuereinheit eingerichtet ist, die Informationsstruktur mit den statischen Informationen durch eine Verkleinerung der Informationsstruktur, durch eine Vergrößerung der Informationsstruktur und durch eine Umsortierung innerhalb der Informationsstruktur basierend auf der erkannten Strukturänderung der technischen Hardware zu verändern.

In einer weiteren Ausführungsform ist die Automatisierungseinrichtung zum Erkennen einer Strukturänderung der technischen Hardware des Anlagenmoduls basierend auf der Erkennung einer Aktivierung oder Deaktivierung einer Komponente der technischen Hardware oder Teilen hiervon, beispielsweise eines Sensors oder eines Aktors oder einer Funktion dieser, eingerichtet. Wird beispielsweise ein Sensor der technischen Hardware hinzugefügt und mit der Automatisierungseinrichtung verbunden, so meldet sich dieser Sensor (bspw. als Dienst) an und überträgt beispielsweise entsprechende statische Informationen bezüglich seiner Funktion, seines zur Verfügung gestellten Dienstes und seiner Parameter bzw. Messwerte, so dass diese Informationen dann als Aktivierung der technischen Hardware erkannt und somit als Strukturänderung der technischen Hardware erkannt werden. Basierend auf den Signalen, welche von den hinzugefügten Komponenten dann an die Steuerung übertragen werden, wird dann die Informationsstruktur mit den statischen Informationen verändert, im oben Beispiel also durch Hinzufügen der entsprechenden statischen Informationen zur der Informationsstruktur, wodurch die hinzugefügte Komponente in die Informationsstruktur integriert und durch den Sever verwendet werden kann.

Gemäß einer Ausführungsform ist die elektronische Steuereinheit eingerichtet ist, eine Versionierung der auf einer erkannten Strukturänderung der technischen Hardware basierende Veränderung der Informationsstruktur zu erstellen. Hierdurch lassen sich Rückschlüsse über den Verlauf der Änderungen ermitteln.

Gemäß der Erfindung ist die elektronische Steuereinheit eingerichtet, die Informationsstruktur mit den dynamischen Informationen basierend auf der erkannten Strukturänderung zu verändern.

Die Aufgabe wird im Übrigen auch mit dem Anlagenmodul gemäß Anspruch 10 erfindungsgemäß gelöst, wobei das Anlagenmodul eine Automatisierungseinrichtung wie vorstehend beschrieben aufweist. Dabei kann beispielsweise vorgesehen sein, dass beispielsweise eine technische Anlage eine Mehrzahl solcher Anlagenmodule hat.

Die Aufgabe wird im Übrigen auch mit dem Verfahren gemäß Anspruch 11 erfindungsgemäß gelöst. Vorteilhafte Ausgestaltungen des Verfahrens finden sich in den entsprechenden Unteransprüchen.

Die Erfindung wird anhand der beigefügten Figuren beispielhaft näher erläutert. Es zeigen:
- Figur 1 -: Schematische Ansicht einer prozesstechnischen Anlage mit mehreren Anlagenmodulen;
- Figur 2 -: Schematische Darstellung einer Anpassung der Informationsstruktur.

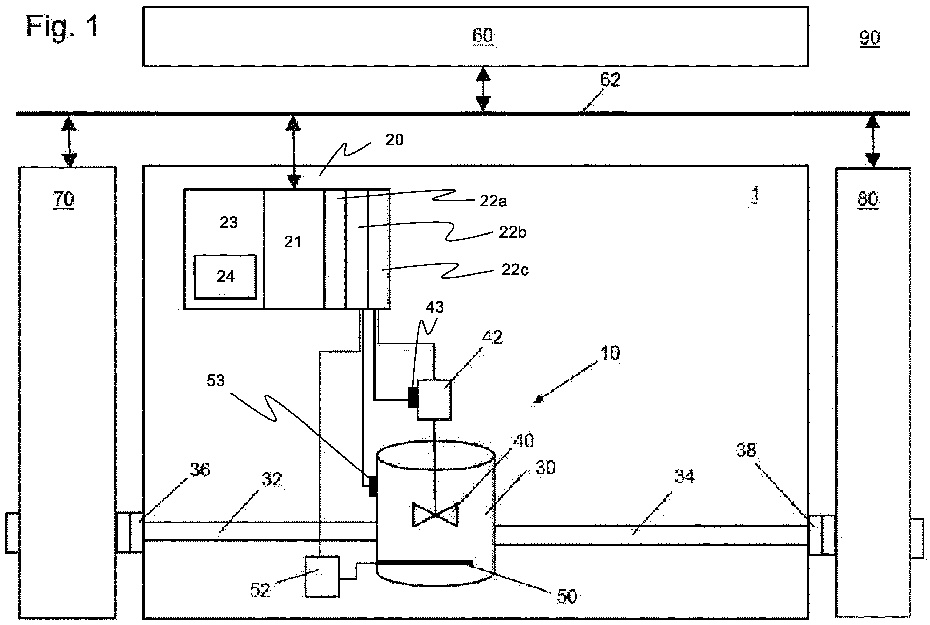

Figur 1 zeigt eine prozesstechnische Anlage 90, die aus mehreren einzelnen Modulen 1, 70, 80 und möglicherweise weiteren nicht dargestellten Modulen aufgebaut ist. Die prozesstechnische Anlage 90 weist weiterhin eine übergeordnete Prozessführungsebene 60 auf, welche über einen geeigneten Bus 62 oder Netzwerk mit den einzelnen Anlagenmodulen 1, 70, 80 kommuniziert.

Das Anlagenmodul 1 der prozesstechnischen Anlage 90 steht dabei beispielhaft für alle Module 1, 70, 80 der prozesstechnischen Anlage 90. Es umfasst eine prozesstechnische Hardware 10 zur Durchführung eines prozesstechnischen Teilprozesses. Im dargestellten Beispiel umfasst die prozesstechnische Hardware 10 beispielsweise einen Reaktor 30, der einen Mischer 40 aufweist, welcher über einen Elektromotor 42 angetrieben ist. Weiterhin weist der Reaktor 30 einen elektrischen Heizstab 50 auf, welcher über eine Leistungselektronik 52 angesteuert wird. Der Reaktor 30 selbst besteht aus einem bevorzugt geschlossenen Gefäß, an das ein Einlassrohr 32 und ein Auslassrohr 34 angeschlossen ist, um ihn zu befüllen oder zu entleeren. Das Einlassrohr 32 erstreckt sich bis zur Grenze des beispielhaften Moduls 1 und endet dort an einem Einlassflansch 36. Ebenso erstreckt sich das Auslassrohr 34 bis zur Systemgrenze des Moduls 1 und endet dort an einem Auslassflansch 38. Über den Einlassflansch 36 ist das Modul 1 an ein vorgeschaltetes Modul 120 und über den Auslassflansch 38 an ein nachgeschaltetes Modul 130 anschließbar. Selbstverständlich sind andere prozesstechnische Verschaltungsmöglichkeiten, wie beispielsweise mehrere Einlässe oder mehrere Auslässe bzw. Parallelschaltungen von den Modulen 1, 70, 80 gleichfalls möglich.

Das Anlagenmodul 1 weist des Weiteren eine Automatisierungseinrichtung 20 auf, die eine elektronische Steuereinheit zur lokalen Steuerung der technischen Hardware 10 des Anlagenmoduls 1 hat. Die elektronische Steuereinheit 21 kann dabei beispielsweise eine mikroprozessorgesteuerte Recheneinheit aufweisen, um die lokale Steuerungsaufgabe der technischen Hardware 10 durchführen zu können.

Die elektronische Steuereinheit ist dabei so ausgebildet, dass sie die prozesstechnische Hardware 10 autark steuern und regeln kann. Hierzu ist die elektronische Steuereinheit 21 über z.B. I/O-Module 22a-22c mit einzelnen Komponenten 42, 43, 52, 53 verbunden und kann von diesen Komponenten Signale empfangen und Signale auch an diese Komponenten senden. Damit ist die elektronische Steuereinheit 21 beispielsweise in der Lage, das Anlagenmodul 1 prozesstechnisch in einen definierten Zustand zu bringen. So ist es denkbar, dass das Anlagenmodul 1 eine genau definierte Anzahl von prozesstechnischen Zuständen hat und auf Befehl autark zwischen den Zuständen wechseln kann. Damit kann das Anlagenmodul 1 beispielsweise einen prozesstechnischen Teilprozess ohne Einfluss von außen autark durchführen.

Im Ausführungsbeispiel der Figur 1 ist die elektrische Steuereinheit 21 über die I/O-Module 22a-22c mit einem Elektromotor 42, einem Drehzahlsensor 43, einer Leistungselektronik 52 für einen elektrischen Heizstab 50 sowie einem Temperatursensor 53 verbunden. Von dem Drehzahlsensor 43 und dem Temperatursensor 53 erhält die elektronische Steuereinheit 21 entsprechende Informationen über die Drehzahl bzw. Temperatur und kann dann basierend auf der internen Logik dann den Elektromotor 42 sowie die Leistungselektronik 52 für den Heizstab 50 so ansteuern, dass die entsprechenden Werte eingeregelt werden.

Die Automatisierungseinrichtung 20 weist des Weiteren eine elektronische Schnittstelleneinheit 23 auf, die der elektronischen Steuereinheit 21 der Automatisierungseinrichtung 20 elektrisch verbunden ist. Die elektronische Schnittstelleneinheit 23 stellt dabei eine Außenschnittstelle zur Kommunikation mit der Prozessführungsebene 60 mittels des Buses 62 dar. Über diese elektronische Schnittstelleneinheit 23 kann die Automatisierungseinrichtung 20 entsprechende Befehle von der Prozessführungsebene 60 erhalten, um so beispielsweise das Anlagenmodul 1 in einen definierten Zustand zu bringen.

Die elektronische Schnittstelleneinheit 23 hat hierfür einen Server 24, der erfindungsgemäß ein OPC-UA-Server ist. Der Server 24 hat eine Informationsstruktur, die sowohl statische als auch dynamische Informationen bezüglich der Hardware 10 des Anlagenmoduls 1 enthält. Die statischen Informationen der Informationsstruktur beschreiben dabei die technische Hardware 10, insbesondere hinsichtlich der mit der elektronischen Steuereinheit 21 verbundenen Komponenten 42, 43, 52 und 53. Über die statischen Informationen der Informationsstruktur sowie der Informationsstruktur selber werden somit die technischen Komponenten der Automation wie der Elektromotor 42, der Drehzahlsensor 43, die Leistungselektronik 52 sowie der Temperatursensor 53 hinsichtlich der Funktion, Dienste und Parameter der zugrunde gelegten Messwerte definiert und beschreiben, so dass basierend hierauf die elektronische Steuereinheit 21 das Anlagenmodul und die Hardware 10 entsprechend steuern kann. Des Weiteren weist die Informationsstruktur dynamische Informationen auf, die von der elektronischen Steuereinheit 21 als von der technischen Hardware 10 abhängige zeitvariable Werte in die Informationsstruktur geschrieben werden. Erhält die elektronische Steuereinheit 21 über ihre I/O-Module 22a-22c entsprechende Sensorwerte, beispielsweise von dem Drehzahlsensor 43 oder dem Temperatursensor 53, so werden diese Messwerte als dynamische Informationen in die Informationsstruktur des Servers 24 der elektronischen Schnittstelleneinheit 23 geschrieben.

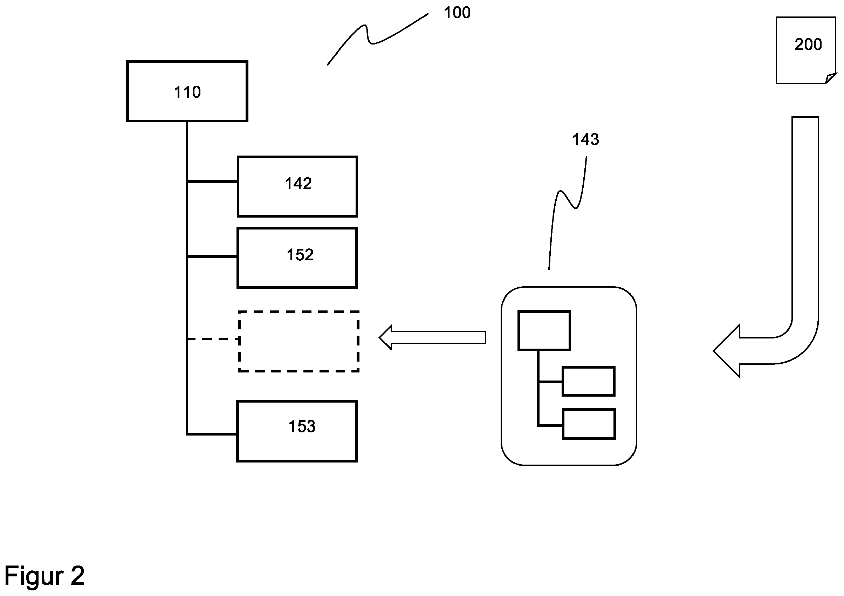

Figur 2 zeigt in einer schematisch sehr vereinfachten Darstellung die Informationsstruktur 100, die aus einem Wurzelknoten 110 und weiteren Knoten, die nachfolgend beschrieben werden, aufgebaut ist. Für jede in Figur 1 beschriebene Komponente 42, 43, 53, 52, die mit der Automatisierungseinrichtung 20 in Verbindung steht, ist in der Informationsstruktur ein eigener Knoten definiert, der weitere Knoten bzw. Daten enthalten kann und hierüber sowohl die statischen Informationen als auch die dynamischen Informationen gespeichert werden.

So weist die Informationsstruktur 100 neben dem Wurzelknoten 110 in einer sehr vereinfachten Darstellung ein erstes Strukturelement 142 auf, das dem Elektromotor 42 des Anlagenmoduls 1 in Figur 1 entspricht. Darüber hinaus ist ein weiteres Strukturelement 152 vorgesehen, das der Leistungselektronik 52 in Figur 1 entspricht. Außerdem ist ein Strukturelement 153 vorgesehen, das dem Temperatursensor 53 in Figur 1 entspricht.

Würde der Drehzahlsensor 43 des Elektromotors 42 noch nicht existieren und würde dieser Drehzahlsensor 43 im laufenden Betrieb des Anlagenmoduls 1 hinzugefügt, so ist der anfänglich in der Informationsstruktur 100 des Servers 24 noch nicht enthalten. Nachdem der Drehzahlsensor 43 entsprechend mechanisch an dem Elektromotor 42 verbaut und mit der Automatisierungseinrichtung 20 verbunden ist, sendet der Drehzahlsensor 43 ein entsprechendes Signal 200, welches entsprechende Konfigurationen, wie die angebotenen Dienste, Funktionen und Parameter enthält. Dieses Signal 200 wird von der Automatisierungseinrichtung 20 empfangen, beispielsweise durch die elektronische Steuereinheit 21 oder der elektronischen Schnittstelleneinheit 23, so dass anhand des Signals 200 eine Strukturänderung der technischen Hardware 10 des Anlagenmoduls 1 erkannt wird. Diese Strukturänderung betrifft dabei das Hinzufügen des Drehzahlsensors 43 zu dem Elektromotor 42.

Basierend auf dem Signal 200 und der erkannten Strukturänderung werden nun die für den Server 24 benötigten statischen Informationen 143 bezüglich des Drehzahlsensors 53 erstellt und in die Informationsstruktur 100 des Servers 24 eingebaut. Dabei wird die Informationsstruktur 100 verändert, da nunmehr zwischen dem Strukturelement 152 betreffend die Leistungselektronik 52 und dem Strukturelement 153 betreffend den Temperatursensor das Strukturelement 143 betreffend den Drehzahlsensor 43 eingefügt wird, wodurch die Informationsstruktur 100 mit weiteren statischen Informationen bezüglich der technischen Hardware 10 erweitert und die Informationsstruktur an sich verändert und an die neue technische Hardware 10 angepasst wird. Darüber hinaus kann die elektronische Steuereinheit 23 durch Ergänzung des Drehzahlsensors 43 eine zusätzliche Funktion in Form eines Dienstes anbieten und diesen ebenfalls in die Informationsstruktur 100 einbetten.

Die Informationsstruktur 100 kennt nun die entsprechenden Funktionen, Dienste und Parameter des Drehzahlsensors 43 und der daraus entstehenden zusätzlichen Funktionen des Anlagenmoduls 1 über die eingefügten statischen Informationen 143 u.a. des jeweiligen Strukturelementes und kann so entsprechend diese Dienste adressieren.

**In** gleicher Weise ist es auch möglich, entsprechende Komponenten der technischen Hardware 10 zu entfernen oder zu ergänzen, wodurch jedes Mal die Informationsstruktur 100 angepasst wird.

Damit wird es möglich, die Komponenten für die Automation der technischen Hardware hinzuzufügen, ohne dass hierfür die Informationsstruktur 100, der Server 24, die elektronische Schnittstelleneinheit 23 oder gar die elektronische Steuereinheit 21 umprogrammiert bzw. umkonfiguriert werden muss.

### Bezugszeichenliste

- 1 -: Anlagenmodul
- 10 -: technische Hardware
- 20 -: Automatisierungseinrichtung
- 21 -: elektronische Steuereinheit
- 22a-22c -: I/O-Module
- 23 -: elektronische Schnittstelleneinheit
- 24 -: Server
- 30 -: Reaktor
- 32 -: Einlassleitung
- 34 -: Auslassleitung
- 36 -: Einlassflansch
- 38 -: Auslassflansch
- 40 -: Rührwerk
- 42 -: Elektromotor
- 43 -: Drehzahlsensor
- 50 -: Heizstab
- 52 -: Leistungselektronik
- 53 -: Temperatursensor
- 60 -: übergeordnete Steuerung
- 62 -: Datenbus
- 70, 80 -: weitere Anlagenmodule
- 90 -: prozesstechnische Anlage
- 100 -: Informationsstruktur
- 110 -: Wurzelknoten
- 142 -: Strukturelement des Elektromotors
- 152 -: Strukturelement des Heizstabes
- 143 -: Strukturelement des Drehzahlsensors
- 153 -: Strukturelement des Temperatursensors
- 200 -: Signal

## Patentansprüche

1. Automatisierungseinrichtung (20) zur lokalen Steuerung einer technischen Hardware (10) eines Anlagenmoduls (1), wobei die technische Hardware (10) des Anlagenmoduls (1) zur Durchführung eines technischen Teilprozesses vorgesehen ist, aufweisend:
- eine elektronische Steuereinheit (21) zur lokalen Steuerung der technischen Hardware (10) des Anlagenmoduls (1), wobei die elektronische Steuereinheit (21) eingerichtet ist, die technische Hardware (10) des Anlagenmoduls (1) zu steuern; und
- eine elektronische Schnittstelleneinheit (23), die mit der elektronischen Steuereinheit (21) verbunden oder verbindbar ist;
- wobei die elektronische Schnittstelleneinheit (23) einen OPC-UA Server (24) umfasst,
- wobei der OPC-UA Server (24) der elektronischen Schnittstelleneinheit (23) eine vorgegebene Informationsstruktur (100) mit statischen und dynamischen Informationen hat, wobei die statischen Informationen der Informationsstruktur (100) die technische Hardware (10) des Anlagenmoduls (1) beschreiben und die elektronische Steuereinheit (21) die dynamischen Informationen als von der technischen Hardware (10) abhängige zeitvariable Werte in die Informationsstruktur (100) schreibt;
**dadurch gekennzeichnet, dass**
- die Automatisierungseinrichtung (20) zum Erkennen einer Strukturänderung der technischen Hardware (10) des Anlagenmoduls (1) basierend auf einem Signal einer hinzugefügten Komponente der technischen Hardware (10) ausgebildet ist, wobei das Signal entsprechende Konfigurationen der Komponente enthält, wobei das Signal die angebotenen Dienste, Funktionen und Parameter der Komponente enthält, und wobei die hinzugefügte Komponente in der Informationsstruktur des OPC-UA-Servers (24) noch nicht enthalten ist,
- die Informationsstruktur (100) eine Mehrzahl von Knoten (110) und Verknüpfungen der Knoten (110) enthält, wobei für jede mit der Automatisierungseinrichtung (20) in Verbindung stehende Komponente der technischen Hardware (10) ein eigener Knoten (110) definiert ist, der weitere Knoten oder Daten enthalten kann und hierüber sowohl die statischen Informationen als auch die dynamischen Informationen gespeichert werden,
- wobei die elektronische Steuereinheit (21) eingerichtet ist, die Informationsstruktur (100) mit den statischen Informationen zur Beschreibung der technischen Hardware (10) und den dynamischen Informationen basierend auf dem die Konfigurationen der Komponente enthaltenen Signal und der erkannten Strukturänderung automatisch zu verändern, so dass die Informationsstruktur (100) an die geänderte technische Hardware angepasst wird und die geänderte Informationsstruktur (100) mit den statischen Informationen die technische Hardware (10) des Anlagenmoduls (1) nach der Strukturänderung beschreibt, wobei die Strukturänderung dabei das Hinzufügen der hinzugefügten Komponente betrifft.

2. Automatisierungseinrichtung (20) nach Anspruch 1, **dadurch gekennzeichnet, dass** die statischen Informationen der Informationsstruktur (100) Parameter, Funktionen und/oder Dienste der technischen Hardware (10) des Anlagenmoduls (1) und/oder des technischen Teilprozesses beinhalten.

3. Automatisierungseinrichtung (20) nach einem der vorhergehenden Ansprüche, **dadurch gekennzeichnet, dass** die Informationsstruktur (100) einen oder mehrere Schema-Platzhalter zur Veränderung der Informationsstruktur (100) enthält.

4. Automatisierungseinrichtung (20) nach einem der vorhergehenden Ansprüche, **dadurch gekennzeichnet, dass** die Informationsstruktur (100) des OPC-UA Servers (24) zumindest aus Teilen der Struktur eines Modul-Type-Package (MTP) gebildet wird, das alle Informationen enthält, die zur Integration der technischen Hardware (10) des Anlagenmoduls (1) notwendig sind.

5. Automatisierungseinrichtung (20) nach einem der vorhergehenden Ansprüche, **dadurch gekennzeichnet, dass** die elektronische Steuereinheit (21) zum Verändern der Informationsstruktur (100) mit den statischen Informationen im laufenden Betrieb der Steuerung der technischen Hardware (10) des Anlagenmoduls (1) und/oder im laufenden Betrieb der technischen Hardware (10) des Anlagenmoduls (1) ausgebildet ist.

6. Automatisierungseinrichtung (20) nach einem der vorhergehenden Ansprüche, **dadurch gekennzeichnet, dass** die elektronische Steuereinheit (21) eingerichtet ist, die Informationsstruktur (100) mit den statischen Informationen durch eine Verkleinerung der Informationsstruktur (100), durch eine Vergrößerung der Informationsstruktur (100) und durch eine Umsortierung innerhalb der Informationsstruktur (100) basierend auf der erkannten Strukturänderung der technischen Hardware (10) zu verändern.

7. Automatisierungseinrichtung (20) nach einem der vorhergehenden Ansprüche, **dadurch gekennzeichnet, dass** die Automatisierungseinrichtung (20) zum Erkennen einer Strukturänderung der technischen Hardware (10) des Anlagenmoduls (1) weiter basierend auf der Erkennung einer Aktivierung oder Deaktivierung einer Komponente der technischen Hardware (10) eingerichtet ist.

8. Automatisierungseinrichtung (20) nach einem der vorhergehenden Ansprüche, **dadurch gekennzeichnet, dass** die elektronische Steuereinheit (21) eingerichtet ist, eine Versionierung der auf einer erkannten Strukturänderung der technischen Hardware (10) basierende Veränderung der Informationsstruktur (100) zu erstellen.

9. Anlagenmodul (1) aufweisend eine technische Hardware (10) zur Durchführung eines technischen Teilprozesses und eine Automatisierungseinrichtung (20) nach einem der vorhergehenden Ansprüche.

10. Verfahren zur lokalen Steuerung einer technischen Hardware (10) eines Anlagenmoduls (1), wobei die technische Hardware (10) des Anlagenmoduls (1) zur Durchführung eines technischen Teilprozesses vorgesehen ist, wobei das Verfahren die folgenden Schritte umfasst:
- Erkennen einer Strukturänderung der technischen Hardware (10) des Anlagenmoduls (1) mittels einer Automatisierungseinrichtung (20), die eine elektronische Steuereinheit (21) zur lokalen Steuerung der technischen Hardware (10) des Anlagenmoduls (1) aufweist, die mit einer elektronischen Schnittstelleneinheit (23) verbunden ist, wobei die Erkennung der Strukturänderung basierend auf einem Signal einer hinzugefügten Komponente der technischen Hardware (10) erfolgt, wobei das Signal entsprechende Konfigurationen der Komponente enthält, wobei das Signal die angebotenen Dienste, Funktionen und Parameter der Komponente enthält, wobei die elektronische Schnittstelleneinheit (23) einen OPC-UA Server (24) umfasst, der eine vorgegebene Informationsstruktur (100) mit statischen und dynamischen Informationen hat, wobei die hinzugefügte Komponente in der Informationsstruktur des OPC-UA-Servers (24) noch nicht enthalten ist, wobei die statischen Informationen der Informationsstruktur (100) die technische Hardware (10) des Anlagenmoduls (1) beschreiben und die elektronische Steuereinheit (21) die dynamischen Informationen als von der technischen Hardware (10) abhängige zeitvariable Werte in die Informationsstruktur (100) schreibt, und wobei die Informationsstruktur (100) eine Mehrzahl von Knoten (110) und Verknüpfungen der Knoten (110) enthält, wobei für jede mit der Automatisierungseinrichtung (20) in Verbindung stehende Komponente der technischen Hardware (10) ein eigener Knoten (110) definiert ist, der weitere Knoten oder Daten enthalten kann und hierüber sowohl die statischen Informationen als auch die dynamischen Informationen gespeichert werden,
- Verändern der Informationsstruktur (100) mit den statischen Informationen zur Beschreibung der technischen Hardware (10) und den dynamischen Informationen basierend auf dem die Konfigurationen der Komponente enthaltenen Signal und der erkannten Strukturänderung der technischen Hardware (10) mittels der elektronischen Steuereinheit (21), so dass die Informationsstruktur (100) an die geänderte technische Hardware angepasst wird und die geänderte Informationsstruktur (100) mit den statischen Informationen die technische Hardware (10) des Anlagenmoduls (1) nach der Strukturänderung beschreibt, wobei die Strukturänderung dabei das Hinzufügen der hinzugefügten Komponente betrifft..

11. Verfahren nach Anspruch 10, **dadurch gekennzeichnet, dass** die Informationsstruktur (100) mit den statischen Informationen im laufenden Betrieb der Steuerung der technischen Hardware (10) des Anlagenmoduls (1) und/oder im laufenden Betrieb der technischen Hardware (10) des Anlagenmoduls (1) verändert wird.

12. Verfahren nach einem der Ansprüche 10 oder 11, **dadurch gekennzeichnet, dass** eine Strukturänderung der technischen Hardware (10) des Anlagenmoduls (1) weiter basierend auf der Erkennung einer Aktivierung und/oder Deaktivierung eines Elementes der technischen Hardware (10) durch die Automatisierungseinrichtung (20) erkannt wird.

13. Verfahren nach einem der Ansprüche 10 bis 12, **dadurch gekennzeichnet, dass** eine Versionierung der auf einer erkannten Strukturänderung der technischen Hardware (10) basierenden Veränderung der Informationsstruktur (100) mittels der elektronischen Steuereinheit (21) erstellt wird.

14. Verfahren nach einem der Ansprüche 10 bis 13, **dadurch gekennzeichnet, dass** eine Automatisierungseinrichtung (20) nach einem der Ansprüche 1 bis 9 zur lokalen Steuerung der technischen Hardware (10) des Anlagenmoduls (1) bereitgestellt und verwendet wird.

## Claims

1. Automation device (20) for local control of a technical hardware (10) of a system module (1), wherein the technical hardware (10) of the system module (1) is provided for carrying out a technical sub-process, comprising:
- an electronic control unit (21) for local control of the technical hardware (10) of the system module (1), wherein the electronic control unit (21) is arranged to control the technical hardware (10) of the system module (1); and
- an electronic interface unit (23) connected or connectable to the electronic control unit (21);
- wherein the electronic interface unit (23) comprises an OPC-UA server (24)
- wherein the OPC-UA server (24) of the electronic interface unit (23) has a specified information structure (100) with static and dynamic information, the static information of the information structure (100) describing the technical hardware (10) of the plant module (1) and the electronic control unit (21) writes the dynamic information into the information structure (100) as time-variable values dependent on the technical hardware (10);
**characterized in that**
- the automation device (20) is designed for detecting a structural change of the technical hardware (10) of the system module (1) based on a signal of an added component of the technical hardware (10), wherein the signal contains corresponding configurations of the component, wherein the signal contains the services and functions offered and parameters of the component, and wherein the added component is not yet contained in the information structure of the OPC UA server (24),
- the information structure (100) contains a plurality of nodes (110) and links between the nodes (110), whereby a separate node (110) is defined for each component of the technical hardware (10) associated with the automation device (20), which node can contain further nodes or data and on which both the static information and the dynamic information are stored,
- wherein the electronic control unit (21) is configured to automatically modify the information structure (100) containing the static information describing the technical hardware (10) and the dynamic information based on the signal containing the configurations of the component and the detected structural change, so that the information structure (100) is adapted to the changed technical hardware is adapted to the changed technical hardware and the changed information structure (100) with the static information describes the technical hardware (10) of the system module (1) after the structural change, wherein the structural change relates to the addition of the added component.

2. Automation device (20) according to claim 1, **characterized in that** the static information of the information structure (100) contains parameters, functions, and/or services of the technical hardware (10) of the plant module (1) and/or the technical sub-process.

3. Automation device (20) according to one of the preceding claims, **characterized in that** the information structure (100) contains one or more schema placeholders for modifying the information structure (100).

4. Automation device (20) according to one of the preceding claims, **characterized in that** the information structure (100) of the OPC-UA server (24) is formed at least from parts of the structure of a module type package (MTP) which contains all the information necessary for the integration of the technical hardware (10) of the system module (1).

5. Automation device (20) according to one of the preceding claims, **characterized in that** the electronic control unit (21) is designed for changing the information structure (100) with the static information during ongoing operation of the control of the technical hardware (10) of the system module (1) and/or during ongoing operation of the technical hardware of the system module (1).

6. Automation device (20) according to one of the preceding claims, **characterized in that** the electronic control unit (21) is designed for changing the information structure (100) with the static information by reducing the information structure (100), by increasing the information structure (100), and by rearranging within the information structure (100) based on the detected structural change of the technical hardware (10).

7. Automation device (20) according to one of the preceding claims, **characterized in that** the automation device (20) is set up to detect a structural change in the technical hardware (10) of the system module (1) further based on the detection of an activation or deactivation of a component of the technical hardware (10).

8. Automation device (20) according to one of the preceding claims, **characterized in that** the electronic control unit (21) is arranged to create a versioning of the change of the information structure (100) based on a detected structural change of the technical hardware (10).

9. System module (1) comprising technical hardware (10) for performing a technical sub-process and an automation device (20) according to one of the preceding claims.

10. Method for local control of a technical hardware (10) of a system module (1), wherein the technical hardware (10) of the system module (1) is provided for performing a technical sub-process, wherein the method comprises the following steps:
- Detecting a structural change of the technical hardware (10) of the system module (1) by means of an automation device (20), which has an electronic control unit (21) for local control of the technical hardware (10) of the system module (1), which is connected to an electronic interface unit (23), wherein the detection of the structural change is based on a signal of an added component of the technical hardware (10), wherein the signal contains corresponding configurations of the component, wherein the signal contains the services, functions, and parameters offered by the component, wherein the electronic interface unit (23) comprises an OPC-UA server (24) which has a predetermined information structure (100) with static and dynamic information, wherein the added component is not yet contained in the information structure of the OPC UA server (24), wherein the static information of the information structure (100) describes the technical hardware (10) of the system module (1) and the electronic control unit (21) writing the dynamic information into the information structure (100) as timevariable values dependent on the technical hardware (10), and wherein the information structure (100) contains a plurality of nodes (110) and links between the nodes (110), wherein a separate node (110) is defined for each component of the technical hardware (10) connected to the automation device (20) of the technical hardware (10), which node can contain further nodes or data and on which both the static information and the dynamic information are stored,
- modifying the information structure (100) with the static information for describing the technical hardware (10) and the dynamic information based on the signal containing the configurations of the component and the detected structural change of the technical hardware (10) by means of the electronic control unit (21), so that the information structure (100) is adapted to the changed technical hardware and the changed information structure (100) with the static information describes the technical hardware (10) of the system module (1) after the structural change, wherein the structural change relates to the addition of the added component.

11. Method according to claim 10, **characterized in that** the information structure (100) with the static information is changed during ongoing operation of the control of the technical hardware (10) of the system module (1) and/or during ongoing operation of the technical hardware (10) of the system module (1).

12. Method according to one of claims 10 or 11, **characterized in that** a structural change of the technical hardware (10) of the system module (1) is further detected based on the detection of an activation and/or deactivation of an element of the technical hardware (10) by the automation device (20).

13. Method according to one of claims 10 to 12, **characterized in that** a versioning of the change of the information structure (100) based on a detected structural change of the technical hardware (10) is created by means of the electronic control unit (21).

14. Method according to one of claims 10 to 13, **characterized in that** an automation device (20) according to one of claims 1 to 9 is provided and used for local control of the technical hardware (10) of the system module (1).

## Revendications

1. Dispositif d'automatisation (20) pour la commande locale d'un matériel technique (10) d'un module d'installation (1), le matériel technique (10) du module d'installation (1) étant prévu pour l'exécution d'un sous-processus technique, comprenant :
- une unité de commande électronique (21) pour la commande locale du matériel technique (10) du module d'installation (1), l'unité de commande électronique (21) étant conçue pour commander le matériel technique (10) du module d'installation (1) ; et
- une unité d'interface électronique (23) reliée ou susceptible d'être reliée à l'unité de commande électronique (21) ;
- l'unité d'interface électronique (23) comprenant un serveur OPC-UA (24),
- le serveur OPC-UA (24) de l'unité d'interface électronique (23) ayant une structure d'informations prédéfinie (100) contenant des informations statiques et dynamiques, les informations statiques de la structure d'informations (100) décrivant le matériel technique (10) du module d'installation (1), et l'unité de commande électronique (21) écrivant les informations dynamiques dans la structure d'informations (100) sous forme de valeurs variables dans le temps dépendant du matériel technique (10) ;
**caractérisé en ce que**
- le dispositif d'automatisation (20) est conçu pour détecter une modification de structure du matériel technique (10) du module d'installation (1) sur la base d'un signal provenant d'un composant ajouté du matériel technique (10), le signal contenant les configurations correspondantes du composant, le signal contenant les services proposés, fonctions et paramètres du composant, et le composant ajouté n'étant pas encore contenu dans la structure d'informations du serveur OPC-UA (24),
- la structure d'informations (100) contient une pluralité de nœuds (110) et des liaisons entre les nœuds (110), un nœud (110) distinct étant défini pour chaque composant du matériel technique (10) en liaison avec le dispositif d'automatisation (20), lequel nœud peut contenir d'autres nœuds ou données permettant de stocker à la fois les informations statiques et les informations dynamiques,
- l'unité de commande électronique (21) étant conçue pour modifier automatiquement la structure d'informations (100), contenant les informations statiques pour la description du matériel technique (10) et les informations dynamiques, sur la base du signal contenant les configurations du composant et de la modification de structure détectée, de sorte que la structure d'informations (100) soit adaptée au matériel technique modifié et que la structure d'informations modifiée (100) contenant les informations statiques décrive le matériel technique (10) du module d'installation (1) après la modification de structure, la modification de structure concernant l'ajout du composant ajouté.

2. Dispositif d'automatisation (20) selon la revendication 1,
**caractérisé en ce que** les informations statiques de la structure d'informations (100) contiennent des paramètres, des fonctions et/ou des services du matériel technique (10) du module d'installation (1) et/ou du sous-processus technique.

3. Dispositif d'automatisation (20) selon l'une des revendications précédentes,
**caractérisé en ce que** la structure d'informations (100) contient un ou plusieurs espaces réservés pour modifier la structure d'informations (100).

4. Dispositif d'automatisation (20) selon l'une des revendications précédentes,
**caractérisé en ce que** la structure d'informations (100) du serveur OPC-UA (24) est formée au moins par des parties de la structure d'un Module Type Package (MTP) qui contient toutes les informations nécessaires à l'intégration du matériel technique (10) du module d'installation (1).

5. Dispositif d'automatisation (20) selon l'une des revendications précédentes,
**caractérisé en ce que** l'unité de commande électronique (21) est conçue pour modifier la structure d'informations (100) contenant les informations statiques pendant le fonctionnement en cours de la commande du matériel technique (10) du module d'installation (1) et/ou pendant le fonctionnement en cours du matériel technique (10) du module d'installation (1).

6. Dispositif d'automatisation (20) selon l'une des revendications précédentes,
**caractérisé en ce que** l'unité de commande électronique (21) est conçue pour modifier la structure d'informations (100) contenant les informations statiques en réduisant la structure d'informations (100), en agrandissant la structure d'informations (100) et en effectuant un tri au sein de la structure d'informations (100) sur la base de la modification de structure détectée du matériel technique (10).

7. Dispositif d'automatisation (20) selon l'une des revendications précédentes,
**caractérisé en ce que** le dispositif d'automatisation (20) est conçu pour détecter une modification de structure du matériel technique (10) du module d'installation (1) en outre sur la base de la détection d'une activation ou d'une désactivation d'un composant du matériel technique (10).

8. Dispositif d'automatisation (20) selon l'une des revendications précédentes,
**caractérisé en ce que** l'unité de commande électronique (21) est conçue pour créer une version de la modification de la structure d'informations (100) basée sur une modification de structure détectée du matériel technique (10).

9. Module d'installation (1) comprenant un matériel technique (10) pour l'exécution d'un sous-processus technique et un dispositif d'automatisation (20) selon l'une des revendications précédentes.

10. Procédé pour la commande locale d'un matériel technique (10) d'un module d'installation (1), le matériel technique (10) du module d'installation (1) étant prévu pour l'exécution d'un sous-processus technique, le procédé comprenant les étapes suivantes consistant à :
- détecter une modification de structure du matériel technique (10) du module d'installation (1) à l'aide d'un dispositif d'automatisation (20) qui comprend une unité de commande électronique (21) pour la commande locale du matériel technique (10) du module d'installation (1), qui est reliée à une unité d'interface électronique (23), la détection de la modification de structure s'effectuant sur la base d'un signal d'un composant ajouté du matériel technique (10), le signal contenant les configurations correspondantes du composant, le signal contenant les services proposés, fonctions et paramètres du composant, l'unité d'interface électronique (23) comprenant un serveur OPC-UA (24) qui a une structure d'informations prédéfinie (100) contenant des informations statiques et dynamiques, le composant ajouté n'étant pas encore contenu dans la structure d'informations du serveur OPC-UA (24), les informations statiques de la structure d'informations (100) décrivant le matériel technique (10) du module d'installation (1), et l'unité de commande électronique (21) écrivant les informations dynamiques dans la structure d'informations (100) sous forme de valeurs variables dans le temps dépendant du matériel technique (10), et la structure d'informations (100) contenant une pluralité de nœuds (110) et des liaisons entre les nœuds (110), un nœud (110) distinct étant défini pour chaque composant du matériel technique (10) en liaison avec le dispositif d'automatisation (20), lequel nœud peut contenir d'autres nœuds ou données permettant de stocker à la fois les informations statiques et les informations dynamiques,
- modifier la structure d'informations (100), contenant les informations statiques pour la description du matériel technique (10) et les informations dynamiques, sur la base du signal contenant les configurations du composant et de la modification de structure détectée du matériel technique (10) au moyen de l'unité de commande électronique (21), de sorte que la structure d'informations (100) soit adaptée au matériel technique modifié et que la structure d'informations modifiée (100) contenant les informations statiques décrive le matériel technique (10) du module d'installation (1) après la modification de structure, la modification de structure concernant l'ajout du composant ajouté.

11. Procédé selon la revendication 10,
**caractérisé en ce que** la structure d'informations (100) contenant les informations statiques est modifiée pendant le fonctionnement en cours de la commande du matériel technique (10) du module d'installation (1) et/ou pendant le fonctionnement en cours du matériel technique (10) du module d'installation (1).

12. Procédé selon l'une des revendications 10 ou 11,
**caractérisé en ce qu'**une modification de structure du matériel technique (10) du module d'installation (1) est détectée en outre sur la base de la détection d'une activation et/ou d'une désactivation d'un élément du matériel technique (10) par le dispositif d'automatisation (20).

13. Procédé selon l'une des revendications 10 à 12,
**caractérisé en ce qu'**une version de la modification de la structure d'informations (100) basée sur une modification de structure détectée du matériel technique (10) est créée au moyen de l'unité de commande électronique (21).

14. Procédé selon l'une des revendications 10 à 13,
**caractérisé en ce qu'**un dispositif d'automatisation (20) selon l'une des revendications 1 à 9 est fourni et utilisé pour la commande locale du matériel technique (10) du module d'installation (1).
